# EUROPEAN PATENT APPLICATION

(11) **EP 3 907 208 A1**
(43) Date of publication of application: **10.11.2021**
(21) Application number: 20173656.8
(22) Date of filing: 08.05.2020
(51) Int. Cl.: C05C 3/00, C05C 9/00, C05G 3/90

(54) **UREA AMMONIUM SULFATE-BASED COMPOSITION**

(71) Applicant: Yara International ASA, 0277 Oslo (NO)
(72) Inventor: COLPAERT, Filip, B-9052 Zwijnaarde (BE); van Belzen, Ruud, NL-4541 HJ Sluiskil (NL)
(74) Representative: De Clercq & Partners

(57) **Abstract**

The present disclosure is related to a solid, particulate urea ammonium sulfate-based composition, the particles comprising a core comprising urea ammonium sulfate, and a coating layer surrounding and contacting the core, comprising from about 95 weight% to about 99.9 weight% of urea and a urease inhibitor. The composition displays a higher stability of the urease inhibitor. The present disclosure also provides a method to manufacture the solid, particulate urea ammonium sulfate-based composition.

## Description

### Field of the invention

The present invention relates to the field of solid particulate fertilizer compositions, in particular urea ammonium sulfate-based fertilizer compositions.

### Background of the invention

Urea is the most common nitrogen-containing fertilizer worldwide. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Due to intensive farming and the reduction of sulphur emissions in the air by industry and the subsequent supply to the ground via rain, modern agriculture requires sulphur in addition to nitrogen.

Good agricultural practice usually requires nitrogen and sulphur in a ratio 10/1 to 5/1 in order to answer to the crop demand, for example 150 kg nitrogen/ha/year and 30 kg sulphur/ha/year.

Lack of sulphur results both in a lower quantity and a lower quality of crops, and sulphur deficiency is often reflected in the content and type of proteins. Sulphur is indeed a major element entering the chemistry of the cells in molecules such as amino acids (cysteine, methionine, etc.). It is also a catalyst for the photosynthesis and, in some cases, may improve the fixation of atmospheric nitrogen.

Conventionally, sulphur has been applied to the soil in the form of elemental sulphur, or as compounds such as ammonium sulphate, ammonium bisulphate, thiosulphates, sulphides or gypsum, or in combination with other fertilizer materials such as urea, for example as a physical blend of urea and ammonium sulphate, or as a co-granulated urea and ammonium sulphate material, the latter which is hereinafter called urea ammonium sulphate, abbreviated as UAS.

The urea that is present in UAS is hydrolysed in the soil under the action of an enzyme catalyst, commonly called urease, to produce ammonia and carbon dioxide. Ureases are found in numerous bacteria, fungi, algae, plants and some invertebrates, as well as in soils, as a soil enzyme. Urease activity tends to increase the pH of its environment as ammonia, a basic compound is dissolved into the water in the soil. Ammonia can then be protonated to form ammonium ions, which are oxidized to nitrate ions, the preferred form of nitrogen from plants. Since plants cannot absorb urea, the urease activity is necessary to provide nitrogen to the plants. However, if ammonia is not transformed quickly into ammonium or if an excess of ammonia builds up in the soil, it can also be released into the atmosphere, thus becoming unavailable for the plant root system, a process called ammonia volatilization. Up to 50 weight% of nitrogen can be lost as a result of the volatilization of ammonia, all depending on the soil type, water content, pH, climate conditions, etc.

The availability of nitrogen, originating from urea, to the root system of plants can be improved by combining (i.e. by incorporation or addition) a urease inhibitor with a urea-containing fertilizer. Urease inhibitors are compounds that are capable of temporarily reducing the activity of the enzyme and slow down the rate at which urea is hydrolysed. When the urease activity is reduced, it gives more time to oxidize the ammonium to nitrates and avoids the build-up of ammonia in the soil. There are many compounds that can inhibit urease, but only a few that are non-toxic to plants, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in US 4,530,714 is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric tri-amide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

However, it has now been shown, as for example in WO2017042194 (Yara, 2017), that urease inhibitors of the type phosphoric triamide, especially when applied as a liquid, which is the most common commercially available form, are not stable when in contact with a urea ammonium sulphate-based composition. Moreover, even a urease inhibitor of the type phosphoric triamide in an alkaline organic solvent, such as a mixture of propylene glycol and N-methylpyrrolidine, stabilised to allow for long storage time of the solution, is rapidly degraded once applied on a urea ammonium sulphate-based composition. Furthermore, the urease inhibitor of the type phosphoric triamide, also applied as a solid, is not stable when in contact with a urea ammonium sulphate-based composition. The problem is most relevant for the storage of said urea ammonium sulphate-based composition, where the urea ammonium sulphate-based composition in particulate form and the urease inhibitor of the type phosphoric triamide are in intimate contact with one another for a prolonged period.

WO2017042194 discloses a UAS-based composition comprising a urease inhibitor of the type phosphoric triamide and an alkaline or alkaline-forming compound such as calcium oxide (CaO), calcium carbonate (CaCO₃), zinc oxide (ZnO) and ethanolamine. The alkaline or alkaline-forming compound increases the stability of the urease inhibitor when both compounds are coated on UAS granules. However, the stability of the urease inhibitor is not fully satisfactory, so there is a need to prepare urea ammonium sulfate-based compositions with increased stability of the urease inhibitor. It may also be desirable to prepare a UAS-based composition comprising nBTPT without the addition of a stabilizer. Although these compounds may contribute positively by increasing the stability of the nBTPT, they also create additional problems such a more complex production process, since it must be bought and distributed in the production chain at the right time. It may also negatively impact some properties of the fertilizer particles, such as dustiness when the stabilizer is applied as a coating.

### Summary of the invention

It is an object of the present invention to overcome or at least alleviate one or more of the aforementioned problems.

In one aspect, the present disclosure provides a solid, particulate urea ammonium sulfate-based composition, the particles comprising: (i) a core comprising urea ammonium sulfate, and (ii) an outer layer surrounding and contacting the core, comprising from about 95 weight% to about 99.9 weight% of urea and a urease inhibitor.

In another aspect, the present disclosure provides a method to manufacture the solid, particulate urea ammonium sulfate-based composition according to the present disclosure.

In another aspect, the present disclosure relates to the use of the solid, particulate urea ammonium sulfate-based composition according to the present disclosure as a fertilizer.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

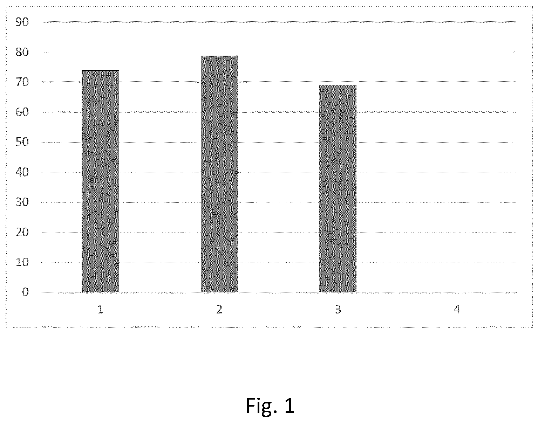

Figure 1 shows the remaining amount of nBTPT in particles according to the present invention and reference particles after 22 days of storage.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a component" refers to one or more than one component.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In one aspect, the present disclosure provides a solid, particulate urea ammonium sulfate-based composition, the particles comprising: (i) a core comprising urea ammonium sulfate, and (ii) an outer layer surrounding and contacting the core, comprising from about 95 weight% to about 99.9 weight% of urea and a urease inhibitor.
It is known that urease inhibitors, in particular of the type phosphoric triamide, are more stable when in contact with urea than in contact with urea ammonium sulfate. It was envisioned to increase the stability of urease inhibitors in urea ammonium sulfate-based compositions by dispersing the inhibitors in a urea-based medium. It was found that core particles comprising urea ammonium sulfate could be covered with a layer essentially comprising or comprising at least 95 weight% of urea. In such compositions, most of the urease inhibitor is not in direct contact with ammonium sulfate; a small fraction located at the interface between the core and the urea outer layer may still be in direct contact with ammonium sulfate.

The core comprising urea ammonium sulphate may be a co-granulated material and may be obtained in several ways, such as by melt-mixing molten urea and solid particulate ammonium sulphate by a process of adding solid particulate ammonium sulphate to molten urea in a granulation step, such as a drum or a pan, as described in US 3,785,796 (Tennessee Valley Authority, 1974), or using a fluidized bed granulator, as described, for example in WO 99/65845 (SKW Stickstoffwerke Piesteritz GmbH, 1999) or as used by Yara in its plants in Sluiskil (The Netherlands). Alternatively, the urea ammonium sulphate may also be prepared according to WO 92/12633 (FMC Corp., USA) or the like, as a compacted material wherein a finely divided solid urea and ammonium sulphate powder is compacted, together with a microcrystalline cellulose to form pastilles, tablets and the like.

Alternatively, ammonium sulphate may be added as a solution or suspension in a solvent, in particular water, to a urea melt. The melt may be granulated with granulation means known in the field, such as a fluidized bed granulator.

Alternatively, the urea ammonium sulphate may be obtained in a chemical process for the production of urea from carbon dioxide and ammonia, wherein ammonia is neutralized to form ammonium sulphate (AS) in the urea melt or solution to produce UAS, as disclosed in WO 2006/004424 A1 (Yara International ASA, Norway), and more specifically using a pipe reactor as a tail end process of a classical urea plant, as disclosed in WO 2006/093413 A1, Yara International ASA, Norway). In a specific embodiment, the ammonia neutralization may be done in the scrubber by sulphuric acid and recycling into the urea melt and granulation.
In the abovementioned cases, the UAS granules are homogeneous in composition, i.e. each granule comprises in principle the same materials.
Alternatively, the UAS may be a particulate blend of particulate urea and particulate ammonium sulphate, for example in powder form, coated onto the particulate urea. In such case, each granule comprises not the same materials.

In one embodiment, and independently of its method of production, the UAS-containing core may contain from about 0.1 to 60 weight% of ammonium sulphate (AS), in particular 0.1 to 40 weight% of AS, more in particular 1 weight% or more, even more in particular 5.0 weight% or more, even more in particular 10 weight% or more, relative to the total weight of the UAS-containing core, of which the remainder of the weight is essentially urea. The core may also comprise other chemicals, such as production additives and/or impurities. Commercially available grades may comprise about 23 to about 30 weight% of AS: YaraVera® Amidas™ (40-0-0 5.5 S), commercialized by Yara International ASA, is a homogeneous granular fertilizer containing urea and ammonium sulphate with a 7.3:1 N to S ratio, and YaraVera® Ureas™ (38-0-0 7.5 S), also commercialized by Yara International ASA, is a homogeneous granular fertilizer containing urea and ammonium sulphate with a 5:1 N to S ratio.

In one embodiment, the average particle size (dp50) of the urea ammonium sulphate-based compound should be between 1 mm and 5 cm, in particular between 1 and 20 mm, more in particular between 1 and 10 mm, even more in particular between 1 and 6 mm, even more in particular between 2 and 4 mm, even more in particular between 3.2 and 3.5 mm, as determined by mesh sieve screening. For fertilizer application, it is desirable that the particles should be big enough to be able to distribute them in the field, but they shouldn't be too big to be adapted to the agricultural equipment and machines.

### Outer layer

An outer layer surrounding and contacting the core and comprising from about 95 weight% to about 99 weight% of urea and a urease inhibitor is added to the particles comprising urea ammonium sulphate. The outer layer may be applied by any means known in the field, such as a coating- or fattening-drum or a second fluidized bed granulator. It may be preferred to add the outer layer in a distinct process, other than the process for the formation of the core particles comprising ammonium sulphate. For example, the core particles may be prepared in a fluidized bed granulator and the outer layer may be added via a fluidized granulator. Some prior art documents (WO2017007315A1, Stamicarbon, 2017 and EP2362863A1, UDHE, 2010) describe the manufacture of a composition comprising urea and ammonium sulphate in a fluidized bed granulator where streams of melt of different compositions are injected in the same granulator. However, this method does not lead to a distinct separation between the core particles and the outer layer and is not recommended to produce the particles according to the present disclosure. The outer layer comprises at least 95 weight% of urea. Urea is a good choice for coating urea ammonium sulphate-based compositions for the following reasons: 1) it has a low hygroscopicity, lower than that of urea ammonium sulphate, which improves the storage potential of the urea ammonium sulphate-based composition; 2) it is a very good nutrient material with a very high nitrogen content, so the overall nutrient content of the final composition is not decreased because of the outer layer; 3) it is quite inactive chemically, i.e. it does not react easily with other compounds, such as urease inhibitors, in particular of the type phosphoric triamide; 4) concentrated solutions of urea, for example, urea melts, are already produced in a plant producing urea ammonium sulphate-based particles, so it does not require a separate synthesis or preparation section.

In one embodiment, the outer layer represents 5 to 20 weight% of the urea ammonium sulfate-based composition. If the outer layer is too thin, the urease inhibitor will not be sufficiently shielded from the ammonium sulfate and the stability of the inhibitor will decrease. If the layer is too thick, the nutrient content of sulphur will decrease and the agricultural benefit will not be achieved fully, requiring a higher application dose in the fields. 5 to 20 weight% was found to be a good compromise between these aspects. In one embodiment, the outer layer represents 6 to 18 weight%, in particular 6 to 15 weight%, more in particular 10 to 15 weight%, of the urea ammonium sulfate-based composition.

### Urease Inhibitor

In one embodiment, the urease inhibitor is of the type phosphoric triamide, wherein the urease inhibitor of the type phosphoric triamide is a compound of formula I: 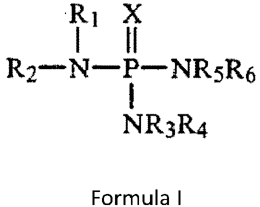 wherein:
X is oxygen or sulphur;
R1 is alkyl, cycloalkenyl, aralkyl, aryl, alkenyl, alkynyl, or cycloalkyl;
R2 is hydrogen, alkyl, cycloalkenyl, aralkyl, aryl, alkenyl, alkynyl, or cyclo-alkyl, or R1 and R2 together may form an alkylene or alkenylene chain which may optionally include one or more heteroatoms of divalent oxygen, nitrogen or sulphur completing a 4, 5, 6, 7, or 8 membered ring system; and
R3, R4, R5 and R6 are individually hydrogen or alkyl having 1 to 6 carbon atoms. In the present specification and claims, the term "phosphoric triamide compounds" is used to refer to the compounds of formula I.

The terms alkyl, cycloalkenyl, aralkyl, aryl, alkenyl, alkynyl, and cycloalkyl as used herein, refer to compounds having from up to 10 carbon atoms, in particular up to 6 carbon atoms. The lowest number of carbon atoms is between 1-3 depending on the structure of the substituent. The substituents may be linear, branched and/or substituted with functional groups, such as hydroxy, keto, ether, amino, nitro among other.

In one embodiment, the urease inhibitor is nBTPT. nBTPT is sold as the most effective known urease inhibitor and has the following chemical formula II: 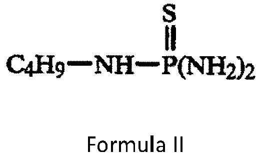 It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In one embodiment, the urease inhibitor is (N-(2-Nitrophenyl) phosphoric triamide. (N-(2-Nitrophenyl) phosphoric triamide is another well-known urease inhibitor of the type phosphoric triamide.

In order to be effective, the urease inhibitor of the type phosphoric triamide, in particular N-(n-butyl) thiophosphoric triamide (nBTPT) is present in or on the outer layer at a level of 0.001 to 1.0 weight%, in particular 0.02 to 0.5% weight%, relative to the total weight of the urea ammonium sulphate-based composition. It was found that an amount of urease inhibitor between 0.001 to 1.0 weight% in or on the outer layer of the particles of the present disclosure improves the stability of the urease inhibitor. In one embodiment, the urease inhibitor is present at a level of around 0.3 weight% in or on the outer layer.

In one embodiment, the urea ammonium sulphate-based composition comprises 0.0001 to 0.5 weight%, in particular 0.001 to 0.1 weight%, more in particular 0.01 to 0.1 weight%, of the urease inhibitor of the type phosphoric triamide, in particular N-(n-butyl) thiophosphoric triamide (nBTPT).

In one embodiment, the urease inhibitor is dispersed in the urea-containing outer layer or present on the outer surface of the urea-containing outer layer. The urease inhibitor may be mixed with the coating solution comprising urea before the coating step. The urease inhibitor may be added to the coating solution in particulate form as a solid, or as a solution or suspension in water or an organic solvent, in particular an organic solvent of the type glycol or glycol ether. If the urease inhibitor is added to the coating solution, it may be desirable to mix the solution to obtain a homogeneous solution. A homogeneous coating solution may be required to obtain a homogeneous outer layer, which would have better properties than an inhomogeneous outer layer, e.g. increased stability of the urease inhibitor. Alternatively, the urease inhibitor may be applied on the outer layer comprising urea. In this case also, the urease inhibitor may be added to the liquid composition comprising urea in particulate form as a solid, or as a solution or suspension in water or an organic solvent, in particular an organic solvent of the type glycol or glycol ether. For example, the urease inhibitor of the type phosphoric triamide may be added as a 25 weight% solution in diethylene glycol monobutyl ether.

In one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain® Ultra (Koch, US), N Yield™ (Eco Agro, The Netherlands), Rhodia Ag-Rho™ N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17,5 weight% of nBTPT. The urease inhibitor may also be used a 25 weight% solution in diethylene glycol monobutyl ether.

In embodiments where the urease inhibitor is used in its solid form, it may be used as a powder, in particular with a purity of 99 weight% or more. It is available, for example, from Sunfit Chemical Co. (China). In one embodiment, the urease inhibitor is in solid particulate form.

### Alkaline or alkaline-forming compound

In some cases, it may be desirable to add an alkaline or alkaline-forming compound to the UAS-based composition described above to further increase the stability of the urease inhibitor of the type phosphoric triamide. For example, the product may be expected to be stored for a prolonged time, or it may require a long transport route to the final customer, or the soils at the targeted customers are known to degrade urea faster than standard soils. In these cases, the inconvenience caused by the addition of another chemical to the production process is outweighed by the benefits of the stabilizer. Further, it is anticipated that the loading of stabilizer may be reduced compared to prior art examples, since the urease inhibitor is already stabilized by the presence of the outer layer.

In one embodiment, the outer layer comprises an alkaline or alkaline-forming compound, selected from the group of metal oxides, metal carbamates, metal hydroxides, metal acetates and any mixtures thereof, or from the group of nitrogen-containing organic bases, such as ammonia, amines, amides, adenines, amidines, guanidines, anilines, carbamates, thiazoles, triazoles, pyridines; imidazoles, benzimidazoles, histidines, phosphazenes, and any mixture thereof, in particular wherein the alkaline or alkaline-forming compound is selected from the group of calcium oxide, zinc oxide, magnesium oxide, calcium carbonate, and mixtures thereof. Although the stability of the urease inhibitor is increased by the presence of the outer layer, it was found to be desirable to add a known stabilizer in the form of an alkaline or alkaline-forming compound. These compounds are known, from WO2017042194, to increase the stability of urease inhibitors of the type triphosphoric amide in urea ammonium sulphate-based compositions.

A range of inorganic and organic compound may be used in such compositions. As an inorganic compound it may be selected from the group of metal oxides, such as calcium oxide, magnesium oxide, zinc oxide, sodium oxide, aluminum oxide, barium oxide and copper oxide; carbonates, such as calcium carbonate, sodium carbonate, ammonium carbonate, barium carbonate; hydroxides, such as aluminum hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof.

As an organic compound, it may be selected from the group of organic bases, such as ammonia; amines, such as triethylamine, ethanolamine and triethanolamine; amides, such as sodium amide and magnesium diamide; adenines; amidines; guanidines; anilines; carbamates; thiazoles; triazoles; pyridines; imidazoles; benzimidazoles; histidines; phosphazenes, and any mixture thereof.

In one embodiment, the alkaline or alkaline-forming compound is dispersed in the urea-containing outer layer or present on the outer surface of the urea-containing outer layer or a combination of both.

In one embodiment, the alkaline or alkaline-forming inorganic or organic compound is present in or on the outer layer at a level of 0.001 to 1.0 weight%, in particular 0.01 to 0.8 weight%, more in particular 0.02 to 0.5 weight%, relative to the total weight of the composition. It is desirable to not use a too large amount of the alkaline or alkaline-forming compound. Using too much may modify the manufacturing process if the compound is added during it, or affect the properties of the particles, such as particle strength, flowability, or tendency to absorb water, when it is applied as a coating. Further, it is not economical to add unnecessary material to a commercialized product. So, it may be desirable to limit the amount of alkaline or alkaline-forming compound to at most 1.0 weight% of the total weight of the composition. In one embodiment, the amount of alkaline or alkaline-forming compound is at most 0.5 weight% of the total weight of the composition.

In one embodiment, the weight ratio of urease inhibitor of the type phosphoric triamide to the one or more alkaline or alkaline-forming inorganic or organic compounds in the compositions according to the invention ranges from 1:15 to 10:1, in particular from 1:10 to 10:1, more in particular from 1:5 to 6:1. In order to obtain a good stabilization effect of the urease inhibitor, it is desirable to adapt the amount of stabilizing agent, the one or more alkaline or alkaline-forming inorganic or organic compounds, to the amount of urease inhibitor used in the UAS-based compositions. Too much stabilizer would only increase the manufacturing cost without improving the stabilization of the urease inhibitor, but too little stabilizer would not have the desired stabilizing effect. Examples of suitable inhibitor to stabilizer ratios are 1:1 or 2:1.
The presence of stabilizer in the outer layer may allow the use of a lower loading of the urease inhibitor. If the stability of the inhibitor is improved by the presence of the stabilizer, this means that less inhibitor needs to be added to the outer layer. Experiments showed that, in compositions according to the invention comprising the stabilizer, less urease inhibitor of the type phosphoric triamide, in particular N-(n-butyl) thiophosphoric triamide (nBTPT) needs to be used than is commonly employed in the prior art. For example, an amount of around 0.05 weight% may be used in combination with a stabilizer, while for the use of Agrotain® Ultra with compositions comprising urea, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In one embodiment, the alkaline or alkaline-forming compound is selected from the group of calcium oxide, zinc oxide, magnesium oxide, calcium carbonate, and mixtures thereof. It was found that calcium oxide, zinc oxide, magnesium oxide and calcium carbonate were particularly suitable for use in the UAS-based composition according to the present disclosure. They provide good stability of the urease inhibitor, are commercially available on large scale, not toxic to plants and present a low risk to human health. They were also found adapted to be used in manufacturing process, i.e. they do not disturb processes such as concentration/evaporation, granulation and/or drying, and/or as a coating.

It is well known in the field of fertilizer manufacturing that additional compounds can be added in two main ways. The alkaline or alkaline forming compound may be added in a stream of reagents used to prepare the coating solution, it may be added in the mother liquor of the coating solution, i.e. before a step of concentration/evaporation to reduce the water content of the composition, it may be added to the coating solution just before the coating step. It is usually desirable to include a mixing step to ensure that the additional compounds are equally distributed in the coating solution to obtain a homogeneous outer layer. Secondly, the alkaline or alkaline-forming compound may be added on the outer layer. This allows a greater versatility of the plant where standard particles are produced in a continuous way and the particles can then be modified according to market requirements or regulations.

### Second stabilizer

From WO2019215123 (Yara, 2019), it is known that a composition comprising urea ammonium sulfate and a urease inhibitor of the type phosphoric triamide benefits from the addition of magnesium sulfate. The magnesium sulfate provides increased stability of the urease inhibitor.

In one embodiment, the solid, particulate urea ammonium sulfate-based composition according to the present disclosure comprises a magnesium sulfate.

In one embodiment, the magnesium sulphate is present in the composition at a level of 0.0001 to 1.0 weight%, preferable 0.02 to 1.0 weight%, most preferably 0.05 to 1.0 weight%, relative to the total weight of the urea ammonium sulfate-based composition. From experiments, it was observed that more than 1 weight% did not produce a proportionally better stabilizing effect.

In one embodiment, the magnesium sulphate is present in the outer layer at a level of 0.001 to 5.0 weight%, preferable 0.02 to 2.0 weight%, most preferably 0.05 to 1.0 weight%, relative to the total weight of the urea ammonium sulphate-based composition.

Magnesium sulphate is an inorganic salt with the chemical formula MgSO_{4.x}(H₂O) where 0≤x≤7. It is solid at room temperature and is available in powder form with various average particle sizes (d₅₀), such as between 5 and 1000 µm. A variety of hydrates is known. The heptahydrate MgSO₄.7(H₂O) (epsomite) can be prepared by neutralizing sulfuric acid with magnesium carbonate or oxide, but it is usually obtained directly from natural sources. The heptahydrate readily loses one equivalent of water to form the hexahydrate. The monohydrate, MgSO₄·H₂O is found as the mineral kieserite. It can be prepared by heating the hexahydrate to approximately 150 °C. Further heating to approximately 200 °C gives anhydrous magnesium sulphate.

In one embodiment, the magnesium sulphate is selected from the group of anhydrous, mono-, di-, tri-, tetra-, penta-, hexa-, heptahydrate, and mixtures thereof. In one embodiment, the magnesium sulphate is anhydrous magnesium sulphate. It was found that presence of water molecules in the magnesium sulphate had some negative influence on the hygroscopic quality of the urea ammonium sulphate. The magnesium sulfate may be applied to the urea ammonium sulfate-based composition as a powder, an aqueous solution or a suspension or solution in an organic solvent. The form of the magnesium sulfate may be decided depending on the mode of application of the magnesium sulfate to the composition.

In one embodiment of the present invention, the magnesium sulphate has a purity of > 70 %, in particular > 80 %, more in particular > 90 %, even more in particular > 99 %.

The magnesium sulphate may be applied to the composition of the present invention by common application techniques, such as coating and blending techniques, well known to the skilled person, such as spray-coating and drum-coating. The magnesium sulfate may be present in the urea ammonium sulfate-based composition in a number of ways. For example, it may be melt-mixed with the urea ammonium sulfate melt. This ensures a homogeneous distribution throughout the core particle.

The magnesium sulfate may also be added to the core particles comprising urea ammonium sulfate as a coating, before the outer layer comprising urea and the urease inhibitor is applied onto the core particles. This allows the magnesium sulfate to act as a buffer between the urea ammonium sulfate and the urease inhibitor comprised in the outer layer, thereby increasing its stability.

The magnesium sulfate may also be present in the outer layer comprising urea and the urease inhibitor. The magnesium sulfate is then in close contact with the urease inhibitor and this may increase its stabilizing effect.

Alternatively, it may be coated on the outer layer comprising urea and the urease inhibitor. Such a process still ensures that the magnesium sulfate is relatively close to the urease inhibitor, but it also simplifies the production process where the particles may be produced according to the standard procedure and the magnesium sulfate is applied at the end of the process.

### Additional coating

In one embodiment, the urea ammonium sulphate-based composition according to the invention further comprises an anti-caking and/or moisture-repellent and/or anti-dusting agent. In one embodiment, the anti-caking and/or moisture-repellent and/or anti-dusting agent particular is applied as a coating on the outer layer of the urea ammonium sulphate-based composition. Fertilizer particles have to endure long transport and storage times before being used in the fields. They may also be exposed to environments with high humidity. It is important for the particles to retain their physical properties until the field application, otherwise the field application, for example with a spreader, will not be even or regular. A common method in the field of fertilizer particles is to add anti-caking and/or moisture-repellent and/or anti-dust material to the particles to improve their properties and maintain them during a long period of time.

In one embodiment, the coating comprises at least a non-polar material, in particular a liquid organic material, such as an oil, wax, resin or the like and any mixture thereof and is present in the composition at a level of 0.0001 to 1.0 weight%, in particular 0.02 to 0.5 weight%, more in particular 0.1 to 0.2 weight%, relative to the total weight of the composition.
Examples of suitable anticaking and/or moisture-repellent coatings are vegetable oil (e.g. rapeseed or neem), paraffin and Novoflow anti-caking and/or moisture repellence agents (Novochem Fertilizer Additives, The Netherlands).

In particular, the moisture-repellent coating may be a coating such as disclosed in EP 0768993 A1 (Norsk Hydro ASA) for a nitrogen-containing fertilizer, comprising at least a wax, an oil and a resin which is oil-soluble and miscible with wax, and optionally, a viscoelastic elastomer, such as polyisobutylene or a styrene-isoprene-styrene block copolymer.

When the anti-caking and/or moisture-repellent and/or anti-dusting agent is applied as a coating, it may be applied on top of the outer layer comprising urea and the urease inhibitor, so that the desired anti-caking and/or moisture-repellent and/or anti-dusting effect is maximal.

In one embodiment, a conditioning agent comprising a micronutrient source is applied to the urea ammonium sulphate-based composition according to the invention. The conditioning agent may be used to add another nutrient to the UAS-based composition, thereby increasing the agronomical value of the composition. Multi-nutrient solid fertilizer compositions are interesting for farmers as they allow the distribution of several nutrients required by the crops in a single application, saving time and money to the farmers. Conditioning agent such as those disclosed in WO2014128468A1 (Yara International, 2014) are suitable a conditioning agent that may be applied to the UAS-based composition of the present disclosure.

In another aspect, the present disclosure provides a method to manufacture the solid, particulate urea ammonium sulfate-based composition according to the present disclosure. The method comprises the steps of: a) providing solid particles comprising urea ammonium sulfate; b) providing a liquid composition comprising at least about 90 weight% of urea; c) providing a urease inhibitor of the type phosphoric triamide; d) optionally, mixing together components provided in steps b) and c); e) applying the liquid composition provided in step b) followed by the urease inhibitor provided in step c) to the particles provided in step a), or applying the composition obtained in step d) to the particles provided in step a); f) optionally, applying an anticaking and/or moisture-repellent and/or anti-dusting agent to the particles obtained in step e), in particular wherein the anticaking and/or moisture-repellent and/or anti-dusting agent comprises at least a non-polar material, in particular a liquid organic material, such as an oil, wax, resin or the like and any mixture thereof and is present in the composition at a level of 0.0001 to 1.0 weight%, in particular 0.02 to 0.5 weight%, more in particular 0.1 to 0.2 weight%, relative to the total weight of the composition.

The manufacture of solid, particulate urea ammonium sulfate-based composition according to the present disclosure start with the particles comprising urea ammonium sulfate, which will form the core of the compositions according to the present disclosure. As discussed above the urea ammonium sulfate-containing particles may be obtained in different ways with different exact compositions. A liquid composition comprising urea, i.e. the coating solution, is provided.

In one embodiment, the liquid composition comprises at least, 91, 92, 93, 94, 95 weight% of urea.

In one embodiment, the liquid composition is a urea melt comprising at least 90 weight% of urea. The composition may comprise other components, such as additives, to obtain a composition with suitable properties to be coated onto the UAS-based particles.

In particular, the liquid composition may comprise water. The liquid composition may comprise more water than the final outer layer to facilitate its transport across the plant. The water content of the liquid composition comprising urea may be adjusted before it is applied to the particles comprising urea ammonium sulphate.

The liquid composition may be coated as such onto the particles or the urease inhibitor of the type phosphoric triamide may be pre-mixed into it. As discussed above the urease inhibitor may be supplied in a solid form or as a suspension or solution in water or an organic solvent. When the urease inhibitor is to be mixed with the coating solution, it may be advantageous to supply the inhibitor in solid form or as a suspension in water. The liquid solution may comprise water, so a suspension of urease inhibitor does not introduce a new component in the composition which may change its properties and affect the coating step. Once both components, the liquid composition and the urease inhibitor, have been applied in a single step or separate steps, a second coating step may be performed to apply an an anticaking and/or moisture-repellent and/or anti-dusting agent.

In one embodiment, the method comprises the additional steps of: g) providing an alkaline or alkaline-forming compound, selected from the group of metal oxides, metal carbamates, metal hydroxides, metal acetates and any mixtures thereof, or from the group of nitrogen-containing organic bases, such as ammonia, amines, amides, adenines, amidines, guanidines, anilines, carbamates, thiazoles, triazoles, pyridines; imidazoles, benzimidazoles, histidines, phosphazenes, and any mixtures thereof, in particular a compound selected from the group of calcium oxide, zinc oxide, magnesium oxide, calcium carbonate, and mixtures thereof; and h) applying the compound provided in step g) to the particles provided in step e), or mixing the compound provided in step g) using the mixing step d). In order to further improve the stability of the urease inhibitor, it may be advantageous to add a component which is known to increase such stability. From the prior art, it is known that alkaline or alkaline-forming inorganic or organic compounds have such an effect and may be referred to as a stabilizer. The alkaline or alkaline-forming compound may be added to the particles produce by the method described above using standard techniques. Alternatively, the compound may be mixed in the liquid composition comprising urea with the urease inhibitor. Mixing the alkaline or alkaline-forming compound in the composition with the urease inhibitor ensures that the inhibitor and the stabilizer are in close proximity which increases the stabilizing effect of the alkaline or alkaline-forming compound.

In one embodiment, the liquid composition comprising urea provided in step b) is a urea melt. A urea melt is a concentrated composition comprising essentially urea and water. A melt comprises typically between 1 and 20 weight%, in particular between 1 and 10 weight%, of water. Urea melt are adequate compositions to be coated on solid particles. The melt can be added as an outer layer to the core particles with a number of known techniques in the field, such as spray-coating in a drum blender or on a conveyor belt, or via a fluidized bed granulator.

In one embodiment, the urease inhibitor of the type phosphoric triamide is provided in particulate form, as a dispersion, or as a solution, in particular wherein the urease inhibitor is provided as a solution in an organic solvent.

In another aspect, the present disclosure relates to the use of the solid, particulate urea ammonium sulfate-based composition according to the present disclosure as a fertilizer in particular for supporting the growth of agricultural products on a sulphur-deficient soil.
It is well known that urea ammonium sulfate particulate compositions can be used as a fertilizer.

### Example 1

Urea ammonium sulphate-based particles containing about 76 weight% of urea and about 23 weight% of ammonium sulphate (i.e. 40 weight% of nitrogen and 5.5 weight% of sulphur, as expressed in S) with an average diameter of 3.2 mm were placed in a fluidized bed granulator. A urea melt comprising about 95 weight% of urea and 0.3 weight% of nBTPT was injected via the nozzles of the granulator onto the urea ammonium sulphate-based particles. The particles were left in the granulator for up to 12 min. The thickness of the urea outer layer on the particles was directly related to the time spent in the granulator. For example, particles which spent only 2 minutes in the fluidized bed had an outer layer of urea that represented 3 weight% of the coated particle. Particles which spent 12 minutes in the granulator had an outer layer of urea that represented about 20 weight% of the coated particle. Some particles were further coated with a solution of nBTPT in a glycol ether solvent, and other particles were coated with solid nBTPT. The coated particles were packed in 5 kg bags and stored at 20 °C and 75 % RH (humidity level) for 22 days. The particles were then analyzed and the amount of nBTPT left in the particles was measured by HPLC (EN15688:2008). The results are presented in Figure 1.
For reference, particles of YaraVera Amidas(TM) containing about 76 weight% of urea and about 23 weight% of ammonium sulphate were coated with solid nBTPT or with another commercial solution of nBTPT (Agrotain) as sold by Koch. After 22 days of storage, the reference particles coated with solid nBTPT contained 69% of the initial amount of nBTPT (column "3" of Figure 1), whereas the particles coated with Agrotain did not contain any nBTPT at all (column "4" of Figure 1).
The particles according to the present disclosure contained 74% (for the UAS particles provided with the urea outer layer comprising nBTPT and the nBTPT solution in a glycol ether solvent, column "1" of Figure 1), and 79% (for the UAS particles provided with the urea outer layer comprising nBTPT and the solid nBTPT, column "2" of Figure 1) of the initial amount of nBTPT. So, the provision of an outer layer comprising urea and nBTPT increases the stability of the urease inhibitor in UAS-based compositions.

### Example 2

Urea ammonium sulphate-based particles containing about 76 weight% of urea and about 23 weight% of ammonium sulphate were placed in a fluidized bed granulator and a urea melt was injected in the nozzles of the granulator, wherein the urea melt also comprised sodium hydroxide as a stabilizer in addition to nBTPT. The concentration of the stabilizer in the melt was 500 ppm. After storage for 22 days, 63% of the initial amount of nBTPT was recovered, which is a similar level than the reference particles where solid nBTPT is applied as a coating. As mentioned above, it may be desirable to avoid a solid coating on fertilizer particles since these particles often display a higher dusting property which is not desirable for handling operations.

## Claims

1. A solid, particulate urea ammonium sulfate-based composition, the particles comprising:
(i) a core comprising urea ammonium sulfate, and
(ii) an outer layer surrounding and contacting the core, comprising from about 95 weight% to about 99.9 weight% of urea and a urease inhibitor of the type phosphoric triamide.

2. The urea ammonium sulfate-based composition according to claim 1, wherein the outer layer further comprises an alkaline or alkaline-forming compound, selected from the group of metal oxides, metal carbamates, metal hydroxides, metal acetates and any mixtures thereof, or from the group of nitrogen-containing organic bases, such as ammonia, amines, amides, adenines, amidines, guanidines, anilines, carbamates, thiazoles, triazoles, pyridines; imidazoles, benzimidazoles, histidines, phosphazenes, and any mixture thereof, in particular wherein the alkaline or alkaline-forming compound is selected from the group of calcium oxide, zinc oxide, magnesium oxide, calcium carbonate, and mixtures thereof.

3. The urea ammonium sulfate-based composition according to claim 1 or 2, wherein the outer layer represents 5 to 20 weight% of the urea ammonium sulfate-based composition.

4. The urea ammonium sulphate-based composition according to any one of claims 2 to 3, wherein the alkaline or alkaline-forming compound is dispersed in the outer layer, is present on the outer surface of the outer layer, or a combination thereof, in particular wherein the alkaline or alkaline-forming inorganic or organic compound is present in or on the outer layer at a level of 0.001 to 1.0 weight%, in particular 0.01 to 0.8 weight%, more in particular 0.02 to 0.5 weight%, relative to the total weight of the composition..

5. The urea ammonium sulphate-based composition according to any one of claims 1 to 4, wherein the urease inhibitor is dispersed in the outer layer, is present on the outer surface of the outer layer, or a combination thereof.

6. The urea ammonium sulfate-based composition according to any one of claims 1 to 5, wherein the urease inhibitor is present in or on the outer layer at a level of 0.001 to 1.0 weight%, in particular 0.02 to 0.5 weight%, more in particular 0.03 to 0.06 weight%, relative to the total weight of the composition.

7. The urea ammonium sulphate-based composition according to any one of claims 1 to 6, wherein the urease inhibitor is a compound of formula I: 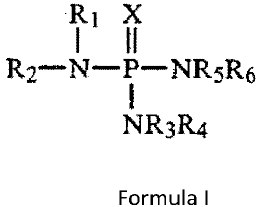 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
- R₃, R₄, R₅ and R₆ are individually hydrogen or alkyl having 1 to 6 carbon atoms; and
- alkyl, cycloalkenyl, aralkyl, aryl, alkenyl, alkynyl, and cycloalkyl refer to compounds having from 1 to 10 carbon atoms, in particular from 1 to 6 carbon atoms, in particular wherein the urease inhibitor is N-(n-butyl) thiophosphoric triamide (nBTPT).

8. The urea ammonium sulphate-based composition according to any one of claims 1 to 7, wherein the urea ammonium sulphate-based composition comprises anti-caking and/or moisture-repellent and/or anti-dusting agent, in particular applied as a coating on the outer layer of the urea ammonium sulphate-based composition.

9. The urea ammonium sulphate-based composition according to claim 8, wherein the anti-caking and/or moisture-repellent and/or anti-dusting agent comprises at least a non-polar material, in particular a liquid organic material, such as an oil, wax, resin or the like and any mixture thereof and is present in the urea ammonium sulphate-based composition at a level of 0.0001 to 1.0 weight%, in particular 0.02 to 0.5 weight%, more in particular 0.1 to 0.2 weight%, relative to the total weight of the composition.

10. The urea ammonium sulphate-based composition according to any one of claims 1 to 9, wherein the core comprises from about 0.1 to 40 weight% of ammonium sulphate.

11. A method to manufacture the solid, particulate urea ammonium sulfate-based composition as defined in any one of claims 1 to 10, comprising the steps of:
a) providing solid particles comprising urea ammonium sulfate;
b) providing a liquid composition comprising at least about 90 weight% of urea;
c) providing a urease inhibitor of the type phosphoric triamide;
d) optionally, mixing together components provided in steps b) and c);
e) applying the liquid composition provided in step b) followed by the urease inhibitor provided in step c) to the particles provided in step a), or applying the composition obtained in step d) to the particles provided in step a);
f) optionally, applying an anticaking and/or moisture-repellent and/or anti-dusting agent to the particles obtained in step e), in particular wherein the anticaking and/or moisture-repellent and/or anti-dusting agent comprises at least a non-polar material, in particular a liquid organic material, such as an oil, wax, resin or the like and any mixture thereof and is present in the composition at a level of 0.0001 to 1.0 weight%, in particular 0.02 to 0.5 weight%, more in particular 0.1 to 0.2 weight%, relative to the total weight of the composition.

12. The method according to claim 11, wherein the method comprises the additional steps of:
g) providing an alkaline or alkaline-forming compound, selected from the group of metal oxides, metal carbamates, metal hydroxides, metal acetates and any mixtures thereof, or from the group of nitrogen-containing organic bases, such as ammonia, amines, amides, adenines, amidines, guanidines, anilines, carbamates, thiazoles, triazoles, pyridines; imidazoles, benzimidazoles, histidines, phosphazenes, and any mixtures thereof, in particular a compound selected from the group of calcium oxide, zinc oxide, magnesium oxide, calcium carbonate, and mixtures thereof; and
h) applying the compound provided in step g) to the particles provided in step e), or mixing the compound provided in step g) using the mixing step d).

13. The method according to claim 11 or 12, wherein the liquid composition comprising urea provided in step b) is a urea melt.

14. The method according to any one of claims 11to 13, wherein the urease inhibitor is provided in particulate form, as a dispersion, or as a solution, in particular wherein the urease inhibitor is provided as a solution in an organic solvent.

15. Use of the solid, particulate urea ammonium sulphate-based composition as defined in any one of claims 1 to 10 as a fertilizer, in particular for supporting the growth of agricultural products on a sulphur-deficient soil.
